**Europäisches Patentamt**

**European Patent Office**

**Office européen des brevets**

(19)

(11) Veröffentlichungsnummer : **0 485 041 B1**

(12) # EUROPÄISCHE PATENTSCHRIFT

(45) Veröffentlichungstag der Patentschrift :
**13.07.94 Patentblatt 94/28**

(51) Int. Cl.$^5$ : **B09B 3/00**

(21) Anmeldenummer : **91250258.0**

(22) Anmeldetag : **25.09.91**

(54) **Verfahren zur Entsorgung von Stäuben, die toxische organische Stoffe und ähnliche Verbindungen enthalten.**

(30) Priorität : **08.11.90 DE 4035777**

(43) Veröffentlichungstag der Anmeldung :
**13.05.92 Patentblatt 92/20**

(45) Bekanntmachung des Hinweises auf die
Patenterteilung :
**13.07.94 Patentblatt 94/28**

(84) Benannte Vertragsstaaten :
**AT CH DE DK LI NL**

(56) Entgegenhaltungen :
**EP-A- 0 299 340**
**EP-A- 0 340 644**
**EP-A- 0 359 003**
**EP-A- 0 393 402**
**DE-A- 2 631 220**
**DE-A- 3 305 120**
**US-A- 4 191 546**
**US-A- 4 666 490**

(73) Patentinhaber : **Noell GmbH**
**Alfred-Nobel-Strasse 20**
**D-97080 Würzburg (DE)**

(72) Erfinder : **Lorson, Heinz, Dr.-Ing.**
**Würzburger Strasse 14b**
**W-8702 Güntersleben (DE)**
Erfinder : **Grote, Johannes, Dr.-Ing.**
**Hermann-Klug-Strasse 13b**
**W-8705 Retzbach (DE)**

(74) Vertreter : **Kaiser, Henning**
**Preussag AG**
**Patente und Lizenzen**
**Postfach 61 02 09**
**D-30602 Hannover (DE)**

## Beschreibung

Die Erfindung betrifft ein Verfahren zur Entsorgung von Stäuben, die toxische Schwermetalle, toxische organische Stoffe und ähnliche Verbindungen enthalten und vorzugsweise aus der Rauchgasreinigung von beispielsweise Müllverbrennungsanlagen stammen. Das Verfahren kann für staubförmige Reststoffe aus Produktionsprozessen angewendet werden, wenn in diesen die genannten Stoffe in erheblichem Umfang auftreten.

Aus der DE-C 26 31 220 beziehungsweise der US-A- 4,666,490 sind Verfahren bekannt, wonach mit toxischen Stoffen belastete Stäube nach Zugabe von Zuschlagsstoffen und Herstellung eines Gemenges durch einen Schmelzprozeß in Glas überführt werden können. In diesem Glas sind toxische Schwermetalle fest in der Glasmatrix eingebaut. Diese Tatsache führt dazu, daß die Schwermetalle aus derartigen Gläsern sehr schwer auslaugbar sind, so daß eine Freisetzung nur in geringsten Mengen erfolgt.

Problematisch ist bei oben genannten Verfahren, die unzureichend geklärte Abgasproblematik zu bewerten. Der Vorgang des Glasschmelzens in einem Schmelzofen führt aufgrund des hohen Chlorid- und Sulfatanteils in den Stäuben und der geringen Aufnahmekapazität des Glases für derartige Stoffe dazu, daß die entweichenden Abgase neben Cl, HCl, SO$_2$, SO$_3$, Schwermetalle sowie Alkalien enthalten.

Aus der DE--A- 38 41 889 ist ein Verfahren bekannt, bei dem das beim Schmelzprozeß anfallende Abgas durch Rückführung in das aufzuschmelzende Gemenge auf 20 bis 50°C abgekühlt und das entstehende Kondensat in die Schmelze zurückgeführt wird. Das kalte Abgas wird einer Gasreinigung unterzogen. Dieses Verfahren ist ebenfalls mit Nachteilen behaftet, die aus der Rückführung der heißen Abgase in das Schmelzgemenge zur Abkühlung der Gase resultieren. Aufgrund des hohen Anteils an niedrigschmelzenden Komponenten in Flugaschen und Flugstäuben treten zwangsläufig Verbackungen im Schmelzgemenge auf, so daß Probleme bei der Gutförderung entstehen. Zusätzlich ist bei einer Vorwärmung des Gemenges auf Temperaturen $\geqq$ 250°C mit der Entstehung von Dioxinen und Furanen zu rechnen.

Aus der EP-B- 0 299 340 A1 ist ein Verfahren zur Entfernung von Schwermetallverbindungen aus Filterstäuben von Müllverbrennungsanlagen bekannt bei dem Filterstaub in einem Reaktionsgefäß bis zur Verdampfungstemperatur der Schwermetallverbindungen erhitzt, der die Schwermetalle enthaltende Dampf aus dem Reaktionsgefäß entfernt und rein thermisch von den Staubpartikeln getrennt, in einem Kühler abgeschreckt und durch Kondensation, Erstarrung sowie Sublimation in den flüssigen oder festen Zustand überführt und abgezogen wird. Dieses Verfahren ist ebenfalls mit Nachteilen behaftet, die aus der Aggressivität des mit Chloriden, Sulfaten und Schwermetallen beladenen Abgases resultieren. Die Heizelemente müssen in diesem Fall entsprechend geschützt werden. Weiterhin ungünstig ist die diskontinuierliche Fahrweise einer derartigen

Anlage sowie die Notwendigkeit einer relativ aufwendigen Verfahrenstechnik.

Eine zufriedenstellende Verfahrensführung zur Entsorgung von Stäuben aus der Müllverbrennung ist aus den genannten Veröffentlichungen nicht abzuleiten.

Der vorliegenden Erfindung liegt die Aufgabe zugrunde, ein Verfahren zur Entsorgung von Stäuben zu entwickeln, welches toxische Schwermetalle aus den Stäuben entfernt und toxische organische Stoffe sowie ähnliche Verbindungen (insbesondere Dioxine und Furane) thermisch zerstört.

Eine weitere Aufgabe der Erfindung ist es, die Abgase aus dem Schmelzprozeß einer geeigneten Abgasreinigung zu unterziehen, so daß das anfallende Glas keine nennenswerten Kontaminationen der o.g. Art aufweist und somit für eine höherwertige Verwertung geeignet ist sowie eine umweltverträgliche Behandlung des Abgases in der Rauchgasreinigungsanlage zu realisieren.

Erfindungsgemäß wird die Aufgabe dadurch gelöst, daß die Stäube, die toxische Schwermetalle, toxische organische Stoffe und ähnliche Verbindungen enthalten und vorzugsweise aus der Rauchgasreinigung von Müllverbrennungsanlagen stammen, mit einem oder mehreren Zuschlagsstoffen zu einem aufschmelzbaren Gemenge vermischt werden und in einem fossil oder in Kombination mit Elektroenergie beheiztem Schmelzreaktor aufgeschmolzen werden, wobei die beim Schmelzprozeß entstehenden heißen Abgase mit Temperaturen > 1200°C mit den aus der Rauchgasreinigung von Müllverbrennungsanlagen stammenden entstaubten und auf Temperaturen zwischen 120 und 250°C abgekühlten Rauchgasen vor dem Eintritt in einen HCl-Wäscher vermischt werden und die gemischten Abgase durch Eindüsung von wässriger Salzsäure oder Wasser auf Temperaturen von 45 bis 80°C abgekühlt werden und die im HCL-Wäscher anfallende verdünnte Salzsäure durch Rektifikation in konzentrierte Salzsäure und eine Sumpffraktion aufgetrennt wird und die im entstaubten Rauchgas und im Abgas des Schmelzprozesses verbliebenen Schwermetallverbindungen, Salze und Reststäube in der Sumpffraktion angereichert, abgetrennt und deponiert werden.

Ein bevorzugtes Merkmal der Erfindung besteht darin, daß durch Zugabe von geeigneten Zuschlagsstoffen oder anderen Abfallstoffen zum Schmelzgemenge ein Glas entsteht, welches der Zusammensetzung eines Basalts entspricht und dieses basaltische Glas durch geeignete Formgebungsverfahren zur Herstellung von

2

Mineral- bzw. Glaswolle verwendet werden kann.

Nach einen anderen bevorzugten Merkmal der Erfindung können als Zuschlagsstoffe natürliche alkalihaltige und mineralische Zuschläge, insbesondere Phonolith und/oder Quarzsand oder künstliche und/oder mineralische Abfälle geeigneter chemischer Zusammensetzung eingesetzt werden.

Durch die erfindungsgemäße Verfahrensführung wird es möglich, daß die bei der Rauchgasreinigung, beispielsweise von Müllverbrennunganlagen anfallenden Stäube, die toxische organische Stoffe und ähnliche Verbindungen, insbesondere Dioxine und Furane enthalten, thermisch zerstört werden und das anfallende Glas mit den eluationssicher eingebundenen Schwermetallen einer höherwertigen Wiederverwertung zugeführt werden kann. Die Abgase aus dem Schmelzprozeß, die die in Gasform überführten Schwermetalle enthalten, werden zusammen mit den entstaubten Rauchgasen aus der Müllverbrennungsanlage einer umweltverträglichen Abgasbehandlung unterzogen, wobei durch die schlagartige Abkühlung der Abgase aus dem Schmelzreaktor eine Neubildung von toxischen chlorierten organischen Stoffen/Verbindungen sicher vermieden wird.

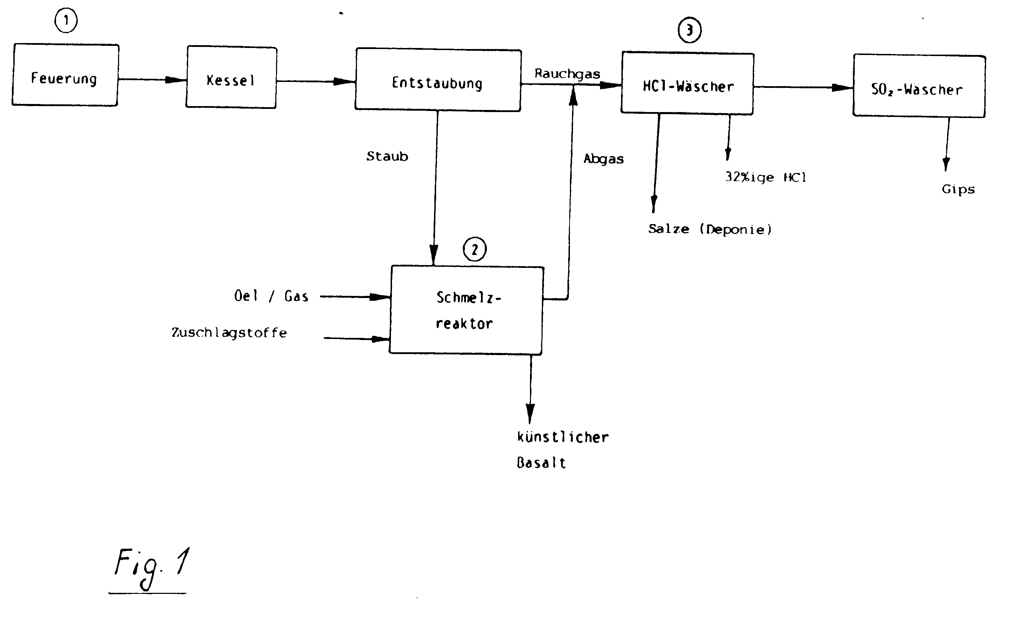

Die Erfindung wird durch ein in der Zeichnung dargestelltes bevorzugtes Ausführungsbeispiel nachfolgend näher beschrieben. Die Zeichnung zeigt in Figur 1 ein bevorzugtes Verfahrensfließbild.

Die Rauchgase, die bei der Müllverbrennung 1 entstehen, werden in einem Kessel auf Temperaturen zwischen 180° und 230°C abgekühlt und in einem Gewebefilter oder einem Elektrofilter entstaubt. Der Staub, der hier abgeschieden wird, enthält Schwermetalle, Salze und toxische organische Verbindungen. Die Zusammensetzung eines solchen Filterstaubes zeigt Tabelle 1.

## Tabelle 1

| Komponente | | FA |
|---|---|---|
| $SiO_2$ | % | 23,5 |
| $TiO_2$ | % | 1,7 |
| $Al_2O_3$ | % | 12,6 |
| $Fe_2O_3$ | % | 2,8 |
| MnO | % | 0,2 |
| MgO | % | 2,7 |
| CaO | % | 18,0 |
| $Na_2O$ | % | 3,5 |
| $K_2O$ | % | 2,5 |
| $P_2O_5$ | % | 1,6 |

| | | | |
|---|---|---|---|
| C | % | | 2,8 |
| S | % | | 2,9 |
| GV | % | | 17,0 |
| As | mg/kg | | 28,0 |
| Cd | mg/kg | | 633,0 |
| Co | mg/kg | | 73,0 |
| Cr | mg/kg | | 1.033,0 |
| Cu | mg/kg | | 1.259,0 |
| Hg | mg/kg | | 13,0 |
| Mo | mg/kg | | 12,0 |
| Ni | mg/kg | | 136,0 |
| Se | mg/kg | | 18,0 |
| Tl | mg/kg | < | 1,0 |
| V | mg/kg | | 99,0 |

Die Filterstäube werden aus den Staubfiltern in ein Silo abgezogen. Dieses Silo dient zu einem als Zwischenlager bei Störfällen und zum anderen zur Vergleichmäßigung des Filterstaubes. Aus dem Zwischensilo wird der Flugstaub über eine Wägeeinrichtung abgezogen und mit Zuschlagstoffen gemischt, so daß die Gemengezusammensetzung in ihren Hauptkomponenten eine basaltische Zusammensetzung aufweist. Als Zuschlagstoffe dienen entweder Sand oder $SiO_2$-reiche Abfallstoffe. Diese Zuschlagsstoffe werden in getrennten Silos gelagert.

Das Feststoffgemisch wird über eine geeignete Eintragsvorrichtung, z. B. eine Förderschnecke in das Schmelzaggregat 2 eingetragen und dort eingeschmolzen. Die zum Ausschmelzen notwendige Temperatur wird durch Verbrennen von Erdgas oder Heizöl El erzeugt. Die Temperaturen im Schmelzraum liegen dabei über 1200°C. Bei dieser Temperaturen werden Schwermetalle wie Hg, Cd, Pb sowie Chloride und Halogenide in Abhängigkeit von der Temperatur in die Gasphase überführt und im Gemenge vorliegende toxische organische Verbindungen (Dioxine und Furane) thermisch zerstört. Sulfate und Chloride werden zum Teil thermisch gespalten. Die dabei entstehenden Metalloxide und die gasförmigen Spaltprodukte $SO_2$ und HCl verlassen mit den Rauchgasen den Reaktionsraum. Die Schmelze bindet bei dieser Schmelztemperatur die noch verbleibenden Schwermetalle schwerlöslich in die Silikatmatrix ein.

Die Rauchgase, die die verdampften Schwermetallverbindungen, die Salze und die Reaktionsprodukte enthalten, verlassen mit einer Temperatur von mehr als 1200°C den Ofenraum. Sie werden über eine beheizte Leitung zum Rauchgaskanal der Müllverbrennungsanlage geleitet. Unmittelbar vor Eintritt in den HCl-Wäscher 3 erfolgt die Mischung der entstaubten auf Temperaturen zwischen 230° und 180°C abgekühlten Rauchgase aus der Feuerung und der heißen Abgase aus dem Schmelzaggregat.

Das gesamte Rauchgas wird sofort in der Quenchstufe des HCl-Wäschers mit einer wässrigen HCl und/oder Wasser auf Temperaturen zwischen 45°C und 80°C abgekühlt. Dabei werden die Salzsäure, die Salze und die Schwermetallverbindungen aus dem Rauchgas der Schmelzanlage zusammen mit den Salzen dem Reststaub und der Salzsäure aus der Müllverbrennungsanlage abgeschieden. Aus dem Quenchersumpf wird ein Teil der Flüssigkeit, die mit den Salzen beladen ist, kontinuierlich abgezogen. Die Salze werden in einer nachgeschalteten thermischen Stufe dann als Feststoff gewonnen. Sie sind die einzigen Reststoffe, aus dem Verbrennungsprozeß, die nicht als verwertbare Produkte deponiert werden müssen.

Die Salzsäure, die beim Einschmelzen der Flugstäube anfällt, wird zusammen mit Salzsäure aus den Rauchgasen der Müllverbrennung gereinigt und aufkonzentriert und fällt als Wertstoff, z. B. als 32 %-ige HCl vermarktungsfähig an.

Das $SO_2$ aus der Spaltung der Sulfate wird Zusammen mit dem $SO_2$ aus den Müllverbrennungsrauchgasen in einem z. B. zweistufigen Kalksteinwäscher ausgewaschen. Als wiederverwertbarer Stoff entsteht dabei Gips.

Durch die schlagartige Abkühlung der Abgase aus dem Schmelzaggregat wird eine Neubildung von toxischen chlorierten organischen Verbindungen sicher vermieden.

Das bei dieser Schmelze erzeugte Glas ist wie Tabelle 2 zeigt, an Schwermetallen verarmt. Bei einem erneuten Aufschmelzen, z. B. bei einem Einsatz in der dämmstofferzeugenden Industrie werden daher keine Schwermetallverbindungen freigesetzt, so daß dieses basaltische Glas als Rohstoffsubstitut in der dämmstofferzeugenden Industrie (Glas- und/oder Mineralwolle) oder ähnlichen Bereichen (Verschleißschutz) eingesetzt werden kann.

Tabelle 2

| Komponente | | Rohstoff | Glas1 | Glas2 | Glas3 | Glas4 |
|---|---|---|---|---|---|---|
| As | mg/kg | 28,0 | 10,0 | 4,0 | 172,0 | 6,0 |
| Cd | mg/kg | 633,0 | 0,5 | 0,3 | 1,1 | 0,6 |
| Co | mg/kg | 73,0 | < 5,0 | 5,0 | 16,0 | 21,0 |
| Cr | mg/kg | 1033,0 | 416,0 | 644,0 | 926,0 | 929,0 |
| Cu | mg/kg | 1259,0 | 266,0 | 375,0 | 349,0 | 701,0 |
| Hg | mg/kg | 13,0 | < 1,0 | < 1,0 | < 1,0 | < 1,0 |
| Mo | mg/kg | 12,0 | 15,0 | <10,0 | 21,0 | 11,0 |
| Ni | mg/kg | 136,0 | 8,0 | 22,0 | 30,0 | 67,0 |
| Se | mg/kg | 18,0 | < 1,0 | < 1,0 | < 1,0 | < 1,0 |
| Tl | mg/kg | < 1,0 | < 1,0 | < 1,0 | < 1,0 | < 1,0 |
| V | mg/kg | 99,0 | 59,0 | 92,0 | 120,0 | 139,0 |

Zusätzlich ist es möglich, daß Material als Baustoffsubstitut und/oder Baustoffzuschlag einzusetzen.
Eine Eluation des Glases gemäß DEV-S4 und eine Untersuchung der dabei gewonnenen Lösungen auf ihren Gehalt an Schwermetallen zeigt Tabelle 3.

Tabelle 3

Eluat nach DEV-S4

| Komponente | Eluat DEV-S4 (ug/l) | |
|---|---|---|
| Be | < | 1,0 |
| Cd | < | 2,5 |
| Cr | < | 10,0 |
| Cu | | 13,0 |
| Ni | < | 10,0 |
| Pb | < | 12,5 |
| Tl | < | 10,0 |
| Zn | < | 50,0 |

Das beim Schmelzprozeß anfallende Abgas zeichnet sich durch extrem geringe Werte an Dioxinen und Furanen aus. Die Gehalte liegen deutlich unter 0,04 ng/Nm³ TE (BImSchV). Dadurch ist eine nahezu quantitative Zerstörung dieser Stoffe gewährleistet.

Eine chemische Analyse der aus der Gasphase desublimierten bzw. kondensierten Bestandteile erbrachte die in Tabelle 4 angeführten Resultate.

## Tabelle 4

### Staubprobe

| Komponente | | | Komponente | | |
|---|---|---|---|---|---|
| Na | % | 14,4 | Al | % | 0,35 |
| K | % | 31 | Ba | % | 0,57 |
| Mg | % | 0,1 | Ca | % | 0,76 |
| Cl | % | 41,7 | Fe | % | 0,55 |
| | | | Pb | % | 1,78 |
| | | | Si | % | 1,09 |
| | | | Zn | % | 2,94 |
| | | | Cd | % | 0,01 |
| | | | Cu | % | 0,06 |
| | | | Mn | % | 0,04 |
| | | | Ti | % | 0,01 |

Hier zeigt sich, daß im wesentlichen Chloride im Staub vorliegen.

Hinsichtlich potentieller Zuschlagstoffe ist verfahrensgemäß vorgesehen, geeignete mineralische Rohstoffe (Quarzsand, Phonolith o. ä.) und/oder Abfallstoffe günstiger chemischer Zusammensetzung einzusetzen, um ein Glas mit basaltischer Zusammensetzung zu erschmelzen. Diese Variante bietet einerseits Vorteil des geringen Preises der Zuschläge sowie deren einfache Handhabung, andererseits ist es möglich, über die Zugabe von geeigneten Abfallstoffen eine Entsorgung derartiger Substanzen anzustreben.
Damit wird das Verfahren insgesamt kostengünstiger durchführbar.

Die mit der Erfindung erzielten Vorteile bestehen insbesondere darin, daß sowohl Schwermetalle, Chloride und Sulfate aus dem Schmelzgemenge entfernt und toxische organische Stoffe (Dioxine und Furane) zerstört sowie die Abgase in günstiger Form gekühlt werden und zusammen mit den entstaubten Abgasen aus der Müllverbrennung in der internen Rauchgasreinigungsanlage gereinigt werden können.

## Patentansprüche

1. Verfahren zur Entsorgung von Stäuben, die toxische Schwermetalle, toxische organische Stoffe und ähnliche Verbindungen enthalten, wobei die Stäube, die vorzugsweise aus einer Rauchgasreinigung von Müllverbrennungsanlagen stammen, mit einem oder mehreren Zuschlagsstoffen zu einem aufschmelzbaren Gemenge vermischt werden und in einem Schmelzreaktor aufgeschmolzen werden, dadurch gekennzeichnet, daß

- die beim Schmelzprozeß entstehenden heißen Abgase mit Temperaturen > 1200°C mit den aus der Rauchgasreinigung von Müllverbrennungsanlagen stammenden entstaubten und auf Temperaturen zwischen 120° und 250°C abgekühlten Rauchgasen vor dem Eintritt in einen HCl-Wäscher vermischt werden,

- die gemischten Abgase durch Eindüsung von wässriger Salzsäure oder Wasser auf Temperaturen von 45°C bis 80°C abgekühlt werden,
- die im HCl-Wäscher anfallende verdünnte Salzsäure durch Rektifikation in konzentrierte Salzsäure und eine Sumpffraktion aufgetrennt wird,
- die im entstaubten Rauchgas und im Abgas des Schmelzprozesses verbliebenen Schwermetallverbindungen, Salze und Reststäube in der Sumpffraktion angereichert, abgetrennt und deponiert werden.

2. Verfahren nach Anspruch 1, dadurch gekennzeichnet, daß die Beschaffenheit der Schmelze durch Zugabe von geeigneten Zuschlagsstoffen oder anderen Abfallstoffen zum Schmelzgemenge in etwa der Zusammensetzung eines Basalts gemäß den folgenden Bestandteilen entspricht: $SiO_2$ 44-48 % , $Al_2O_3$ 13-16 %, FeO 12-14 %, CaO 10-12 %, MgO 11-12 %, $K_2O+Na_2O$ 4-5 %, $TiO_2$ 2-2,5 %, $MnO+P_2O_5$ < 1 %.

3. Verfahren nach den Ansprüchen 1 und 2, dadurch gekennzeichnet, daß als Zuschlagsstoffe natürliche alkalihaltige und mineralische Zuschläge, insbesondere Phonolith und/oder Quarzsand eingesetzt werden.

4. Verfahren nach den Ansprüchen 1 und 2, dadurch gekennzeichnet, daß als Zuschlagsstoffe künstliche und/oder mineralische Abfälle geeigneter chemischer Zusammensetzungen eingesetzt werden.

5. Verfahren nach den Ansprüchen 1 bis 4, dadurch gekennzeichnet, daß das schmelzflüssige basaltische Gemenge durch geeignete Formgebungsverfahren zur Erzeugung von Mineral- bzw. Glaswolle verwendet wird.

6. Verfahren nach den Ansprüchen 1 bis 5, dadurch gekennzeichnet, daß zur Beheizung des Schmelzreaktors fossile Energieträger, insbesondere Gas und/oder Heizöl oder in Kombination mit Elektroenergie eingesetzt werden.

## Claims

1. Method for the removal of dusts containing toxic heavy metals, toxic organic substances and similar compounds, the dusts which preferably originate from a flue-gas purification process in refuse incinerators being mixed with one or a plurality of additives to form a fusible mixture and being fused in a melt reactor, characterised in that
   - the hot waste gases, which are produced during the fusing process and have temperatures greater than 1200° C, are mixed with the dust-free flue gases, which originate from the flue-gas purification process in refuse incinerators and are cooled to temperatures between 120° and 250° C, prior to being introduced into an HCl washer,
   - the mixed waste gases are cooled to temperatures of between 45° and 80° C by the injection of aqueous hydrochloric acid or water,
   - the diluted hydrochloric acid, which accumulates in the HCl washer, is separated into concentrated hydrochloric acid and a sump portion by rectification, and
   - the heavy metal compounds remaining in the dust-free flue gas and in the waste gas of the fusing process, salts and residual dusts in the sump portion are enriched, separated and stored.

2. Method according to claim 1, characterised in that, by the addition of suitable additives or other waste substances to the molten mixture, the nature of the melt corresponds substantially to the composition of a basalt according to the following constituent ingredients: $SiO_2$ 44-48 %, $Al_2O_3$ 13-16 %, FeO 12-14 %, CaO 10-12 %, MgO 11 -12 %, $K_2O+Na_2O$ 4-5 %, $TiO_2$ 2-2.5 %, $MnO+P_2O_5$ < 1 %.

3. Method according to claims 1 and 2, characterised in that natural alkali-containing and mineral additions, more especially phonolite and/or quartz sand, are used as the additives.

4. Method according to claims 1 and 2, characterised in that synthetic and/or mineral waste products of suitable chemical compositions are used as the additives.

5. Method according to claims 1 to 4, characterised in that the molten, basaltic mixture is used to produce mineral or glass wool by suitable form-shaping processes.

6. Method according to claims 1 to 5, characterised in that fossil energy carriers, more especially gas and/or fuel oil or in combination with electric energy, are used to heat the melt reactor.

**Revendications**

1. Procédé pour éliminer des poussières contenant des métaux lourds toxiques, des substances organiques toxiques et des composés similaires, selon lequel les poussières, qui proviennent de préférence d'une épuration de gaz de fumée d'installations d'incinération d'ordures ménagères, sont mélangées à un ou plusieurs additifs pour former un mélange fusible et sont fondues dans un réacteur à fusion, caractérisé en ce que

   - les gaz résiduaires chauds présentant des températures > 1200°C qui se forment lors du processus de fusion sont mélangés, avant l'entrée dans un laveur HCl, aux gaz de fumée provenant de l'épuration de gaz de fumée d'installations d'incinération d'ordures ménagères qui sont dépoussiérés et refroidis à des températures comprises dans une plage allant de 120° à 250°C,
   - les gaz résiduaires mélangés sont refroidis à des températures de 45° à 80°C grâce à l'injection d'acide chlorhydrique aqueux ou d'eau,
   - l'acide chlorhydrique dilué formé dans le laveur HCl est séparé par rectification en acide chlorhydrique concentré et en une fraction résiduelle,
   - les composés de métaux lourds, les sels et les poussières résiduelles subsistant dans les gaz de fumée dépoussiérés et dans les gaz résiduaires du processus de fusion sont concentrés dans la fraction résiduelle, séparés et mis au rebut.

2. Procédé selon la revendication 1, caractérisé en ce que la nature de la matière fondue correspond approximativement, grâce à l'adjonction d'additifs appropriés ou d'autres substances résiduaires pour former le mélange fusible, à la composition d'un basalte comprenant les composants suivants : $SiO_2$ 44-48%, $Al_2O_3$ 13-16%, FeO 12-14%, CaO 10-12%, MgO 11-12%, $K_2O+Na_2O$ 4-5%, $TiO_2$ 2-2,5%, $MnO+P_2O_5$ < 1 %.

3. Procédé selon les revendications 1 et 2, caractérisé en ce qu'on utilise, comme additifs, des additifs alcalins et minéraux naturels, en particulier du phonolite et/ou du sable siliceux.

4. Procédé selon les revendications 1 et 2, caractérisé en ce qu'on utilise, comme additifs, des déchets artificiels et/ou minéraux de compositions chimiques appropriées.

5. Procédé selon les revendications 1 à 4, caractérisé en ce que le mélange basaltique en fusion est utilisé, grâce à des procédés de fabrication appropriés, pour la production de laine minérale ou de laine de verre.

6. Procédé selon les revendications 1 à 5, caractérisé en ce qu'on utilise, pour chauffer le réacteur à fusion, des supports d'énergie fossiles, en particulier du gaz et/ou du fuel ou en combinaison avec de l'énergie électrique.

EP 0 485 041 B1

① Feuerung → Kessel → Entstaubung → Rauchgas → ③ HCl-Wäscher → SO₂-Wäscher

Staub

Abgas

② Schmelz-reaktor

Oel / Gas →

Zuschlagstoffe →

künstlicher Basalt

Salze (Deponie)

32%ige HCl

Gips

Fig. 1